Europäisches Patentamt

European Patent Office

Office européen des brevets

(19)

(11) Publication number: **0 199 570 B1**

# EUROPEAN PATENT SPECIFICATION

(12)

(45) Date of publication of patent specification: **15.05.91**   (51) Int. Cl.⁵: **B60C 11/06, B60C 11/12**

(21) Application number: **86302968.2**

(22) Date of filing: **21.04.86**

(54) A pneumatic tyre.

(30) Priority: **22.04.85 JP 85796/85**

(43) Date of publication of application:
**29.10.86 Bulletin 86/44**

(45) Publication of the grant of the patent:
**15.05.91 Bulletin 91/20**

(84) Designated Contracting States:
**DE FR GB**

(56) References cited:
CH-A- 566 877          GB-A- 727 207
GB-A- 2 093 777      US-A- 2 821 231
US-A- 4 327 792      US-A- 4 353 402

PATENT ABSTRACT OF JAPAN, vol. 9, no. 60
(M-364)[1783], 16th March 1985; & JP-A-59
195 408 (SUMITOMO GOMU KOGYO K.K.)
06.11.1984

PATENT ABSTRACTS OF JAPAN, vol. 9, no.
194 (M-403)[1917], 10th August 1985; & JP-
A-60 60 010 (SUMITOMO GOMU KOGYO K.K.)
06.04.1985
(73) Proprietor: **SUMITOMO RUBBER INDUSTRIES
LIMITED**
**No. 1-1, Tsutsui-cho 1-chome
Chuo-ku Kobe-shi Hyogo 651(JP)**

(72) Inventor: **Kouno, Tadao**
**1-75, Hamadera Suwanomoricho
Sakai-shi Osaka-fu(JP)**

(74) Representative: **Stewart, Charles Geoffrey
SP TYRES UK LIMITED Tyre Technical Division
Fort Dunlop Birmingham B24 9QT(GB)**

## Description

This invention relates to a pneumatic tyre having improved drainage properties, high endurance performance, and uniform wear properties.

Usually in order to improve or to maintain traction performance and cornering performance on a wet road or a snowy road, it is necessary to arrange to expel the water or the snow from between the road and the tread surface. This generally depends on the tyre tread patterns, and accordingly, block type or rib-lug type tread patterns are mainly used as a suitable tread pattern for providing said performance.

Furthermore, in order to improve still more the drainage performance, the main zig-zag circumferential grooves may be made wider and deeper, and wide traverse grooves extending from the said main zig-zag circumferencial groove to the tread edges may also be provided.

On the other hand, a heavy duty radial pneumatic tyre comprising a steel carcass ply and tread reinforcing belt layer composed of rigid steel cords, provides various additional advantages such as high wear-resistance, puncture resistance, low fuel-consumption and the like. However, such radial tyres are somewhat poor in ride comfort owing to the rigid reinforcing effect of the belt. Therefore, radial tyres have usually been developed for use on good roads, and as a result of their advantages have been remarkably widely used with the considerable improvement of road conditions such as the development and building of superhighways.

In such applications, treads of these tyres are, in general, formed with zig-zag type grooves extending in circumferential directions of the tyre to provide traction and braking performances, wear-resistant properties and the prevention of over heating. Such tread patterns are generally called rib-type tread patterns.

In rib type patterns the ribs usually continue in the circumferential direction of the tyre. In most cases, irregular wears occur in the tread when continuously running over a long distance at a high speed. Irregular wears usually begins at the top of the convex parts of the zig-zag ribs from the first wear stage of the tyre to the intermediate wear stage, and this irregularity expands along the side edges of the ribs, depending on the contact pressure distribution of the tread to the road surface and depending on the load. Such irregular wear is generally called "railway wear".

The tread shoulder region also tend to wear more rapidly than the tread centre region region. This wear is called "shoulder wear".

In the case of block type patterns, the rear edges of the blocks tend to wear faster than the front edges. Such uneven wear is called "heel-and-toe wear".

Both these types of irregular wear render not only the appearance of the tyre awkward, but also considerably reduce the life of the tyre. However, such irregular wear, for example, railway wear can be mitigated by the way of arranging a number of short and narrow cuts in the traverse direction of the tyre along both edges of the zig-zag ribs. In the same way shoulder wear can be mitigated by disposing a number of narrow traverse grooves at both tread edges.

However, such traverse grooves or short narrow cuts have been formed by using knife blades in the mould for the vulcanising process and to prevent the knife blade from deformation during the moulding operation, there is a limit to how thin the blades can be and then the grooves found are not very narrow. Such prior art solutions also tend to reduce tread life, due to the reduction of the tread rigidity, and the drainage performance is also apt to be adversely affected. A tyre according to the preamble of claim 1 is known, e.g. from JP-A-6060010.

The invention provides a pneumatic tyre having a tread provided with three wide grooves extending continuously in the circumferential direction of the tyre and subdividing the tread into four circumferentially extending ribs or rows of blocks and a plurality of narrow cuts of substantially no widths crossing completely said ribs or said rows of blocks at an acute angle to the centre line of the tread, the cuts varying in their depths in the axial direction of the tyre such that at least some of the cuts have a greater depth at their axially outward ends then at their axially inward ends, wherein other cuts have a greater depth at their axially inward ends then at their axially outward ends.

The cuts are preferably manufactured by forming them in a separate operation to the original tread moulding and vulcanising operation.

Further aspects of the invention will be made apparent from the following description, by way of example only, of one embodiment in conjunction with the attached diagrammatic drawings in which: -

Fig. 1 is a right-hand plan view of an embodiment of the pneumatic tyre according to the present invention:

Fig.2 is a sectional view of the tread taken along the line A-A in Fig. 1 ; and

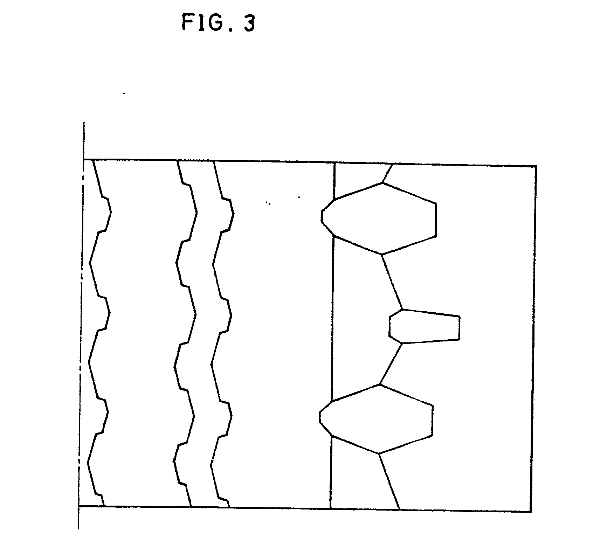

Fig.3 is a plan view of a prior art tyre.

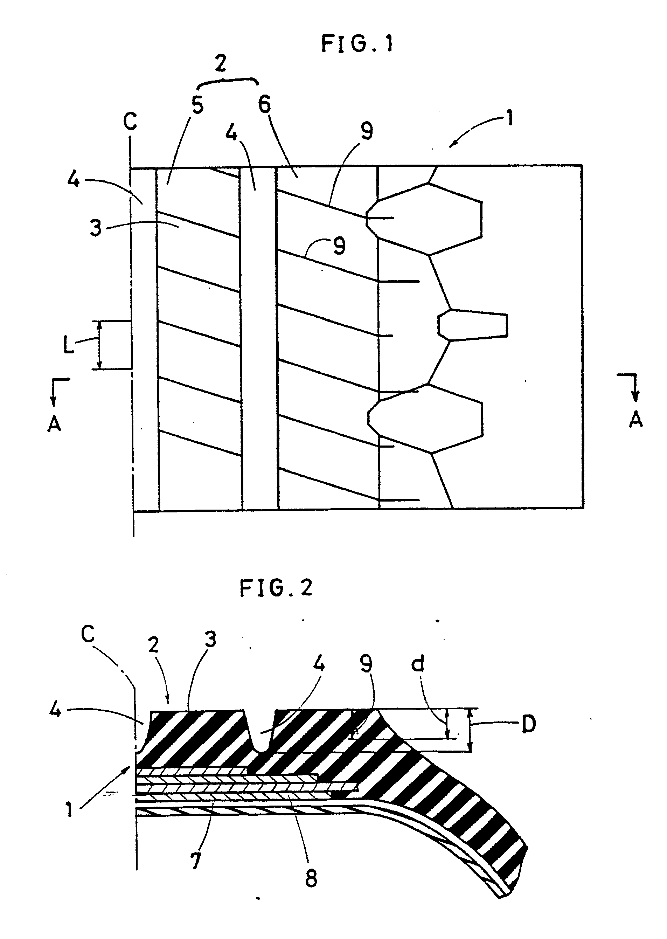

In Figs 1 and 2, the pneumatic tyre 1 comprises:
a tread portion 2 divided into a tread region 5 and a pair of right and left shoulder regions 6 by means of three spaced apart main grooves 4. The main grooves 4 are circumferentially extending in the centre region. A carcass reinforcing ply 7 is provided composed of steel cords at an angle of 70° to 90° with respect to the equatorial line C of the tyre 1. A tread reinforcing belt layer 8 is also provided composed of steel cords arranged between the tread portion 2 and the carcass ply 7.

A plurality of narrow cuts 9, which are circumferentially evenly spaced in the tread portion 2 with an inclination with respect to the equatorial line C. The narrow cuts 9 traverse each of the central regions 5 and the shoulder regions 6. The tyre 1 is provided with these said narrow cuts 9 after the vulcanization of the raw cover. The raw cover tyre is a toroidal-shaped assembly (which is assembled on assembly drum) of the carcass ply 7, the belt layer 8, the bead portions (not shown in the figures), and the tread portion 2.

The narrow cuts 9 are disposed on the tread surface 3 of the prevulcanized tyre crossing the ribs between the main grooves 4, 4 by special machinery which has a thin sharp edged tool to penetrate the tread at a substantial depth.

The thin sharp edged tool (made of a knife, a whetstone or the teeth of a saw) has a thickness of less than 3 mm. As described above said narrow cuts 9 are formed paralled to each other on the overall width of the tread with a circumferentially equi-spaced pitch and substantially without cut width and at an acute angle with respect to the equatorial centre line C of the tread.

Traverse grooves as used with prior art are formed with knife blades in the mould on the vulcanizing process of the raw cover tyre have basically a lower limit to the possible width of the groove. On the other hand the tyre 1 according to the invention can be provided with narrow cuts 9 which have substantially no width. Therefore both side faces of the cut 9 are forced into contact with each other by the compressive stress exerted within the tread portion during contact with the road surface. As a result, loss of wear resistance prevented by the increased tread rigidity as it works as if it is a continuous rubber layer.

Moreover, shoulder wear in the tread portion 2 is effectively prevented by distribution and/or mitigation of bending stress concentration which is induced around the tread edge of the contact area due to soft deformation of the tread rubber. The grip performance is also improved in the same way as above mentioned. Furthermore the drainage efficiency towards the main grooves 4 is improved by means of the breaking of the water layer by both the edges of the narrow cuts 9 as the cuts are by every deformation brought about when the contact area parts from the road.

In order to maximise the said drainage efficiency, the narrow cuts 9 are preferably across the full width of the tread and straight cuts at an inclination of an angle of 30° to 90°, preferably 50° to 80° with respect to the equatorial centre line C of the tyre tread. When the angle of inclination of the narrow cut 9 is too small, the effect to prevent the irregular wear is lessened and also the wet grip effeiciency is reduced.

Furthermore, the depth (d) of the narrow cuts 9 is preferably within the range of 50% to 110% of the depth (D) of the main groove 4. The cuts 9 may be spaced from each other by a distance (L) of 5mm to 50mm, preferably 10mm to 30mm. If the cuts 9 are too large in number, the rigidity of the tread portion 2 is so reduced that the steering stability and the wear resistance are also reduced.

An alternative is to space the cuts from each other by distances of irregular pitch, or a few sets of different pitch being circumferentially repeated. Furthermore cuts which have a different depth (d) can be used.

In addition, the narrow cuts 9 are perfectly formed by special machinery, more preferably by cutting machinery which can automatically adjust the angle and position of the cuts 9 from the point of view of good productivity and manufacturing accuracy.

As mentioned above, a pneumatic tyre according to the invention has a plurality of cuts which have no substantial width by cutting the prevulcanized tyre tread which is provided with main straight longitudinal grooves, accordingly wet grip performance, wear resistance property, tread drainage performance, and the like are improved without any sacrifice in the other tyre performance.

In addition to the above merits, there is no need to furnish the mould with the plurality of thin knife blades, and as the result, the cost of the tyre moulds is reduced. The technique of cutting the tyre tread according to the invention has the advantage over the said prior art of allowing easy changes to the shape and dimensions of the narrow cuts in accordance with particular user's requests.

Moreover, a pneumatic tyre according to the invention with narrow traverse cuts can be applied to rib type, lug type, block type, or rib-lug type patterns for the treads of passengers cars, truck, bus or the like. It is especially usefull for truck, bus steel radial tyres having two to five continuous straight main grooves extending circumferentially on the tread surface.

Experiments were made comparing the effects of the tyres according to the invention with the performance of the prior art tyres. The tyres were tested all in the size of 10.00R20 steel radial tyre. The tyre internal construction were all the same and as shown in Fig.2. An embodiment of the tread pattern according to the invention is shown in Fig. 1 and Table 1 which show the specification of above said cuts.

The wear resistant property and the wet grip performance were evaluated. Results of the experiments arc shown in the following Table 1, wherein the values for the prior art are 100 and the values of the tyres according to the invention are indexed to the 100 base value.

TABLE 1

|  | Present invention | Prior art |
|---|---|---|
| Tyre size | 10.00R20 | 10.00R20 |
| Tread pattern | Fig. 1 | Fig. 3 |
| Cut: |  |  |
|   Cut depth | 10 mm (75% of main groove depth) | ... |
|   Cut width | Under 2 mm | ... |
|   Angle (to the equatorial line) | 70° | ... |
|   Pitch (L) | 13.7 mm | ... |
| Wet grip performance @lock | 103 | 100 |
|   (Note 1)    @peak | 106 | 100 |
| Irregular wear | good | standard |
| Wear-resistance (Note 2) | 110 | 100 |
| Rolling-resistance (Note 3) | 100 | 100 |
| Railway wear | good | poor |

Note 1)  Tested by a trailer truck under wet condition. The larger the index, the better the performance.

Note 2)  The relative index of running distance

per 1mm wear of the tread rubber.

Note 3) Tested by the rolling resistance tester.

As can be seen from the above results, a tyre according to the invention can prevent the irregular wear and these increase tyre life and can improve wet grip performance without sacrifice of other properties, for instance, rolling resistance.

## Claims

1. A pneumatic tyre (1) having a tread (3) provided with three wide grooves (4) extending continuously in the circumferential direction of the tyre and subdividing the tread (3) into four circumferentially extending ribs (5,6) or rows of blocks and a plurality of narrow cuts (9) of substantially no width crossing completely said ribs or said rows of blocks at an acute angle to the centre line (C) of the tread (3), the cuts (9) varying in their depths (d) in the axial direction of the tyre, such that at least some of the cuts (9) have a greater depth at their axially outward ends than at their axially inward ends, characterised in that other cuts (9) have a greater depth at their axially inward ends than at their axially outward ends.

2. A pneumatic tyre according to claim 1 characterised by the tread being moulded with only circumferentially extending wide grooves (4) and the cuts (9) are formed in a separate operation.

## Revendications

1. Pneumatique (1) ayant une bande de roulement (3) qui a trois gorges larges (4) disposées de façon continue dans la direction circonférentielle du pneumatique et divisant la bande de roulement (3) en quatre nervures (5, 6) ou rangées de blocs disposées circonférentiellement, et plusieurs découpes étroites (9) ayant une largeur pratiquement nulle et recoupant complètement les nervures ou rangées de blocs en formant un angle aigu avec l'axe central (C) de la bande de roulement (3), les découpes (9) ayant des profondeurs (d) qui varient dans la direction axiale du pneumatique, de manière que certaines des découpes au moins (9) aient une plus grande profondeur à leurs extrémités axialement externes qu'à leurs extrémités axialement internes, caractérisé en ce que d'autres découpes (9) ont une profondeur plus grande à leurs extrémités axialement internes qu'à leurs extrémités axialement externes.

2. Pneumatique selon la revendication 1, caractérisé en ce que la bande de roulement est moulée uniquement avec de larges gorges (4) disposées circonférentiellement, et les découpes (9) sont formées dans une opération séparée.

## Ansprüche

1. Luftreifen (1) mit einem Laufstreifen (3), der mit drei breiten Nuten (4) versehen ist, die sich kontinuierlich in der Umfangsrichtung des Reifens erstrecken und den Laufstreifen (3) in vier sich in Umfangsrichtung erstreckende Rippen (5,6) oder Blockreihen unterteilen, und mit einer Vielzahl von engen Schnitten (9), die im wesentlichen breitenlos sind und die Rippen oder Blockreihen mit einem spitzen Winkel zur Mittellinie (C) des Laufstreifens (3) durchqueren, wobei die Tiefen (d) der Schnitte (9) sich in Axialrichtung des Reifens so ändern, daß mindestens einige Schnitte (9) an ihren axial außenseitigen Enden eine größere Tiefe als an ihren axial innenseitigen Enden besitzen, dadurch gekennzeichnet, daß andere Schnitte (9) an ihren axial innenseitigen Enden eine größere Tiefe als an ihren axial außenseitigen Enden besitzen.

2. Luftreifen nach Anspruch 1, dadurch gekennzeichnet, daß der Laufstreifen mit sich nur in Umfangsrichtung erstreckenden breiten Nuten (4) geformt ist und daß die Schnitte (9) in einem getrennten Vorgang ausgebildet werden.

FIG. 1

FIG. 2

FIG. 3